# EUROPÄISCHE PATENTSCHRIFT

(11) **EP 1 567 783 B1**
(45) Veröffentlichungstag und Bekanntmachung des Hinweises auf die Patenterteilung: **25.10.2006**
(21) Anmeldenummer: 03812132.3
(22) Anmeldetag: 29.01.2003
(51) Int. Cl.: F16D 65/092, F16D 69/04

(54) **SCHEIBENBREMSE MIT BELAGTRÄGER**
DISC BRAKE COMPRISING A LINING SUPPORT
FREIN A DISQUE COMPRENANT UN PORTE-GARNITURE

(30) Priorität: 05.12.2002 DE 10257092; 06.12.2002 DE 10257353
(43) Veröffentlichungstag der Anmeldung: 31.08.2005
(73) Patentinhaber: Goldbach Automobile Consulting GmbH, 61191 Rosbach (DE)
(72) Erfinder: GOLDBACH, Dieter, 61350 Bad Homburg (DE); SPUKTI, MICHAEL, 35789 Weilmünster (DE)
(74) Vertreter: Weiss, Peter
(86) Internationale Anmeldenummer: PCT/EP2003/000884
(87) Internationale Veröffentlichungsnummer: WO 2004/051110

(56) Entgegenhaltungen:
- EP-A- 0 826 897
- WO-A-02/02963
- DE-A- 4 126 197
- DE-A- 10 055 796
- DE-U- 29 804 619

## Beschreibung

Die Erfindung betrifft eine Scheibenbremse, insbesondere Bremsklotz mit einem Belagträger und einem Reibbelag, wobei dem Belagträger zum Einbinden des Reibbelages zumindest ein Bolzen aufsitzt, sowie ein Verfahren zu dessen Herstellung.

Derartige Scheibenbremsen mit Bremsklötzen sind in vielfältiger Form uns Ausführung bekannt. Verwiesen wird beispielsweise auf die EP-A 0 373 333 oder die DE 41 04 812 A1. Bei derartigen Scheibenbremsen besteht der Belagträger aus Stahl. Für den Reibbelag gibt es eine Vielzahl von Rezepturen, die vor allem den Bremsverschleiss minimieren und die Bremswirkung verbessern sollen.

Aus der US 5,255,762 ist ferner eine Bremsbacke bekannt, bei der im Reibbelag eine Mutter sitzt. Zur Verringerung des Reibbelages mit dem Belagträger wird in die Mutter ein Schraubenbolzen eingeschraubt, welcher eine entsprechende Öffnung in dem Belagträger durchsetzt. Eine Nietverbindung zwischen Reibbelag und Belagträger durch Nieten wird beispielsweise in der US 5,558,186 und der US 3,767,018 aufgezeigt.

Eine gattungsgemäße Scheibenbremse ist aus DE-U-29804619 bekannt.

Der vorliegenden Erfindung liegt die Aufgabe zugrunde, eine Scheibenbremse mit Bremsklötzen sowie ein Verfahren zur Herstellung eines Bremsklotzes zu entwickeln, deren Herstellung vereinfacht und die Qualität wesentlich verbessert. Zudem soll die Reibbelagskompressibilität verbessert werden und eine Belagoberflächenspannung beeinflussbar sein. Zudem sollen die Fertigungskosten durch ein optimiertes Herstellungsverfahren bei höherer Festigkeit zwischen Bolzen und Belagträger auch bei hohen Temperaturen und unterschiedlichen Schwingungen des Reibbelages erheblich verbessert werden.

Zur Lösung dieser Aufgabe führen die Merkmale der Patentansprüche 1 12, und 20.

Bei der vorliegenden Erfindung hat sich als besonders vorteilhaft erwiesen, eine Bolzenlänge zu wählen, die den vollständigen Reibbelag durchgreift, wobei der Bolzen vorzugsweise bis zur Belagsoberfläche oder bis zu einer Hälfte der Dicke des Reibbelages in diesen eingreift. Es sollen jedoch auch alle Möglichkeiten von Bolzenlängen mit umfasst sein, die im Bereich zwischen der Mitte des Reibbelages bis zur Belagoberfläche liegen.

Da der Bolzen aus einem Nichteisenmetall, vorzugsweise aus einem weichen Messing, insbesondere MS 60 gebildet ist, lässt sich dieser Bolzen mit der Bremsscheibe mit dem Reibbelag abschleifen, ohne dass das Bremsverhalten hierdurch beeinträchtigt wird.

Die Ausbildung einer Bolzenlänge zwischen Hälfte der Dicke des Reibbelages bis zur vollständigen Dicke des Reibbelages, schafft insbesondere eine wesentlich höhere und optimierte Reibbelagskompressibilität, wobei auch Einfluss auf die Belagoberflächenspannung hierdurch genommen werden soll. Diese langen Bolzen verhindern unerwünschte Geräuschentwicklungen beim Bremsen mittels des Bremsklotzes gegenüber der Bremsscheibe.

Dabei ist insbesondere wichtig, dass der Bolzen, der einer hohen Temperatur ausgesetzt ist, eine hochfeste Verbindung zum Belagträger eingeht. Es hat sich bei der vorliegenden Erfindung als besonders vorteilhaft erwiesen, um eine hohe temperatur- und schwingungsunempfindliche Festigkeit bzw. Verbindung zwischen Bolzen und Belagträger zu schaffen, den Bolzen als Spitzenzünder oder Hubzünder auszubilden und mittels Spitzenschweissverfahren oder Hubzündschweissverfahren den Bolzen, automatisiert mit dem Belagträger fest zu verschweissen bzw. zu verbinden. Das Spitzenschweissverfahren oder Hubzündschweissverfahren kann mit oder ohne Schutzgas erfolgen und gewährleistet auch bei hohen Einsatztemperaturen des Bremsklotzes eine feste Verbindung des aus Messing oder nicht Eisenmetall gebildeten Bolzens mit dem vorzugsweise aus Stahl gebildeten Belagträger, auch bei hohen Eigenschwingungen des Reibbelages beim Bremsvorgang. Zudem lässt sich hierdurch der Fertigungsprozess vereinfachen und die Fertigungskosten reduzieren.

Es soll auch im Rahmen der vorliegenden Erfindung liegen, die Bolzen mittels Laserschweissverfahren automatisiert auf den Belagträger aufzuschweissen. Hier wird der weiche Bolzen aus Messing mit dem Belagträger aus Stahl oder auch Titan fest verbunden und gewährleistet eine hochfeste, temperaturbeständige und schwingungsunempfindliche Verbindung. Mittels dem Laserschweissverfahren automatisiert, können auch Fertigungszeiten erheblich reduziert werden. Dies soll ebenfalls im Rahmen der vorliegenden Erfindung liegen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 einen Querschnitt durch einen Bremsklotz für eine Scheibenbremse;
Figur 2 einen schematisch dargestellten Querschnitt durch ein weiteres Ausführungsbeispiel eines weiteren Bremsklotzes für eine Scheibenbremse.

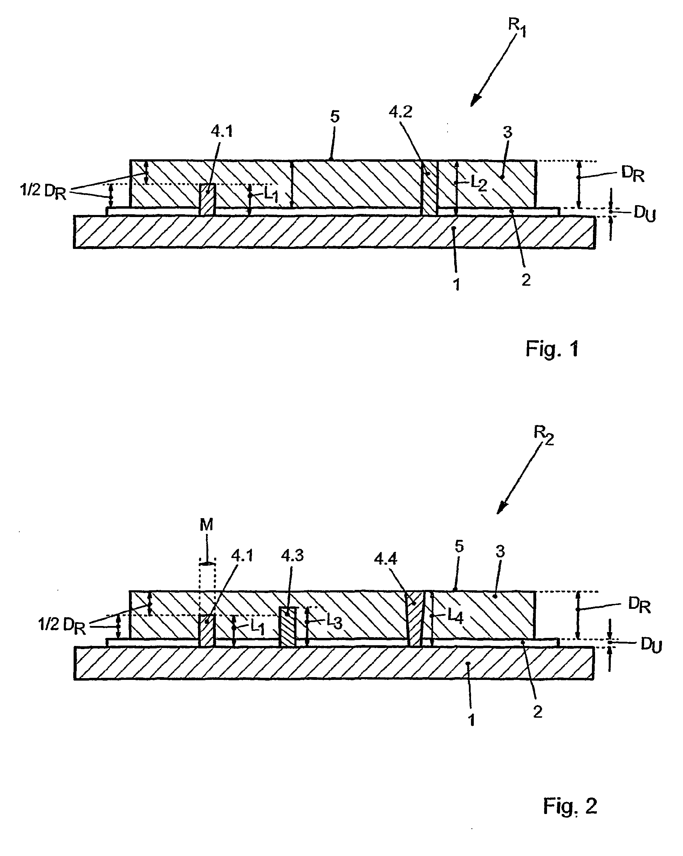

Gemäss Figur 1 wird eine hier nicht näher dargestellte Scheibenbremse mittels eines Bremsklotzes R₁, der mittels hier nicht dargestellten Bremszangen und Bremskolben radial gegen die Scheibenbremse gepresst wird querschnittlich dargestellt. Der Bremsklotz R₁ besteht im wesentlichen aus einem Belagträger 1, auf welchem ein sogenannter Underlayer 2 aufgeklebt ist. Auf den Underlayer 2 ist der eigentliche Reibbelag 3 aufgeklebt bzw. fest mit dem Underlayer 2 verbunden.

Auf den Underlayer 2 kann ggf. verzichtet werden, dann ist der Reibbelag 3 direkt auf den Belagträger 1 aufgeklebt.

Bei der vorliegenden Erfindung ist von besonderer Bedeutung, dass zumindest ein Bolzen 4.1 bis 4.4 fest mit dem Belagträger 1 verbunden, insbesondere fest mit diesem verschweisst ist. Dabei ist der Bolzen 4.1 bis 4.4, wie es auch in Figur 2 dargestellt ist, aus einem weichen Material, insbesondere aus einem weichen Messing, vorzugsweise MS 60 hergestellt und fest mit dem vorzugsweise aus Stahl hergestellten Belagträger 1 verschweisst.

Besteht der Bremsklotz R₁ oder R₂, wie er in Figur 2 dargestellt ist, aus dem Belagträger 1, Underlayer 2 und daran anschliessenden Reibbelag 3, so durchgreift der Bolzen 4.1 bis 4.4 den Unterlayer 2 vollständig.

Als besonders vorteilhaft hat sich bei der vorliegenden Erfindung erwiesen, eine Bolzenlänge L₁, siehe Figuren 1 und 2 auszubilden, die zumindest einhalb der Dicke D_{R} des Reibbelages 3 zzgl. ggf. der Dicke D_{U} des Underlayers 2 entspricht. Die Mindestbolzenlänge L₁ entspricht einhalb der Dicke D_{R} des Reibbelages 3 zzgl. der Dicke D_{U} der Dicke des Underlayers 2. Die Bolzenlänge L₂ des Bolzens 4.2 entspricht der vollständigen Dicke D_{R} des Reibbelages 3 zzgl. ggf. der Dicke des Underlayers D_{U}.

Der Bolzen 4.2 durchgreift den Belagträger 1 vollständig bis zur Belagoberfläche 5. Da der Bolzen 4.2, sowie auch 4.4, siehe Figur 2, der nicht zylindrisch sondern konisch erweitert ausgebildet ist, aus einem weicheren Material als der Reibbelag 3 selbst bzw. die Bremsscheibe ausgebildet ist, schleift dieser mit dem Reibbelag 3 ab.

Es soll jedoch auch im Rahmen der vorliegenden Erfindung liegen, wie es aus Figur 2 hervorgeht, eine Bolzenlänge L₃ zu bilden, die in den Bereichen zwischen einer halben Dicke D_{R} des Reibbelages 3 und der vollständigen Dicke D_{R} des Reibbelages 3 liegt, wie es im Bolzen 4.3 aufgezeigt bzw. angedeutet ist. Wird daher eine Bolzenlänge L₁ bis L₄ gewählt, die in diesen Bereichen liegt, so ergeben sich mehrere Vorteile und Möglichkeiten, den Bremsklotz R₁, R₂ vorteilhaft zu beeinflussen. Insbesondere lässt sich über die Wahl des Durchmessers M des Bolzens 4.1 bis 4.4, die Form des Bolzens 4.1 bis 4.4 und insbesondere über die Bolzenlänge L₁ bis L₄ Einfluss nehmen auf die Belagoberflächenspannung des Bremsklotzes R₁, R₂. Zudem lässt sich hierdurch die Reibbelagskompressibilität durch die Wahl der Bolzenlänge zwischen L₁ bis L₄ optimieren bzw. beeinflussen.

Dies verbessert insbesondere die Haltbarkeit sowie auch die Temperaturbeständigkeit des Bremsklotzes R₁, R₂ erheblich.

Es hat sich ferner als vorteilhaft erwiesen, den Bolzen 4.1 bis 4.2 als Spitzenzünder oder Hubzünder auszubilden, um diesen in einen Fertigungsprozess einzubinden und mittels Spitzenschweissverfahren oder Hubzündschweissverfahren mit dem Belagträger 1 fest zu verschweissen. Hierdurch lässt sich der Fertigungsprozess erheblich optimieren, wobei auch die Haltbarkeit des gleichen aus Messing gebildeten Bolzens 4.1 bis 4.2 mit dem Belagträger 1 wesentlich bei Reduktion der Fertigungskosten verbessert werden kann.

Daher hat es sich als besonders vorteilhaft erwiesen, im Spitzenschweissverfahren oder Hubzündschweissverfahren den aus Messing oder einer derartigen Legierung aus weichem Nichteisenmetall hergestellten Bolzen 4.1 bis 4.2 fest mit dem Belagträger 1 zu verschweissen.

Diese Schweissverbindung zwischen dem Bolzen 4.1 bis 4.4 und dem Belagträger 1 ist deshalb wichtig, da der Reibbelag 3 nicht nur hohen Temperaturen sondern auch hohen Schwingungen ausgesetzt ist. Daher wird erfindungsgemäss durch das Spitzenschweissverfahren oder Hubzündschweissverfahren mit oder ohne Schutzgas eine optimierte Schweissverbindung zwischen dem Bolzen 4.1 bis 4.4 und dem Belagträger 1 erzeugt.

### Positionszahlenliste

| | | | | | |
|---|---|---|---|---|---|
| 1 | Belagträger | 34 | | 67 | |
| 2 | Underlayer | 35 | | 68 | |
| 3 | Reibbelag | 36 | | 69 | |
| 4 | Bolzen | 37 | | 70 | |
| 5 | Belagoberfläche | 38 | | 71 | |
| 6 | | 39 | | 72 | |
| 7 | | 40 | | 73 | |
| 8 | | 41 | | 74 | |
| 9 | | 42 | | 75 | |
| 10 | | 43 | | 76 | |
| 11 | | 44 | | 77 | |
| 12 | | 45 | | 78 | |
| 13 | | 46 | | 79 | |
| 14 | | 47 | | | |
| 15 | | 48 | | R₁ | Bremsklotz |
| 16 | | 49 | | R₂ | Bremsklotz |
| 17 | | 50 | | | |
| 18 | | 51 | | | |
| 19 | | 52 | | L₁ | Bolzenlänge |
| 20 | | 53 | | L₂ | Bolzenlänge |
| 21 | | 54 | | L₃ | Bolzenlänge |
| 22 | | 55 | | L₄ | Bolzenlänge |
| 23 | | 56 | | | |
| 24 | | 57 | | D_{U} | Dicke Underlayer |
| 25 | | 58 | | D_{R} | Dicke Reibbelag |
| 26 | | 59 | | | |
| 27 | | 60 | | M | Durchmesser |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Scheibenbremse, insbesondere Bremsklotz mit einem Belagträger (1) und einem Reibbelag (3), wobei dem Belagträger (1) zum Einbinden des Reibbelages (3) zumindest ein Bolzen (4) aufsitzt,
**dadurch gekennzeichnet,**
**dass** der Bolzen (4) ausgehend von dem Belagträger (1) den Reibbelag (3) von etwa der Mitte bis etwa zur Belagoberfläche (5) durchgreift, wobei der Bolzen (4) aus einem Nichteisenmetall gebildet ist und, im Betrieb, sich der Bolzen (4) mit dem Reibbelag (3) beim Bremsen abschleift.

2. Scheibenbremse nach Anspruch 1, **dadurch gekennzeichnet, dass** der Bolzen (4) den Reibbelag (3) vollständig durchgreift.

3. Scheibenbremse nach Anspruch 1 oder 2, **dadurch gekennzeichnet, dass** der Bolzen (4) auf den Belagträger (1) aufgeschweisst ist.

4. Scheibenbremse nach wenigstens einem der Ansprüche 1 bis 3, **dadurch gekennzeichnet, dass** der Bolzen (4) aus Messing hergestellt ist.

5. Scheibenbremse nach wenigstens einem der Ansprüche 1 bis 4, **dadurch gekennzeichnet, dass** der Bolzen (4) aus Messing, MS 60 hergestellt ist.

6. Scheibenbremse nach wenigstens einem der Ansprüche 4 oder 5, **dadurch gekennzeichnet, dass** der aus Messing gebildete Bolzen (4) mit dem Belagträger (1) fest verschweisst, insbesondere laserverschweisst ist.

7. Scheibenbremse nach wenigstens einem der Ansprüche 4 bis 6, **dadurch gekennzeichnet, dass** der aus Messing hergestellte Bolzen (4) mittels Laserschweissverfahren, Spitzenzündschweissverfahren oder Hubzündschweissverfahren auf den Belagträger (1) aufschweissbar ist.

8. Scheibenbremse nach Anspruch 7, **dadurch gekennzeichnet, dass** der Bolzen (4) automatisiert mittels Laserschweissverfahren, Spitzenschweissverfahren oder Hubzündschweissverfahren auf den Belagträger (1) aufgeschweisst, und der Bolzen (4) als Spitzenzünder oder Hubzünder ausgebildet ist.

9. Scheibenbremse nach wenigstens einem der Ansprüche 1 bis 8, **dadurch gekennzeichnet, dass** zwischen Belagträger (1) und Reibbelag (3) ein Underlayer (2) vorgesehen ist.

10. Scheibenbremse nach wenigstens einem der Ansprüche 1 bis 9, **dadurch gekennzeichnet, dass** zur Beeinflussung der Belagoberflächenspannung und/oder der Reibbelagkompressibilität des Reibbelages (3) der Bolzen (4) von einer Bolzenlänge (L₁ bis L₄) ausgebildet ist, die im Bereich von 1/2 Dicke D_{R} des Reibbelages 3 bis zur vollständigen Dicke D_{R} des Reibbelages liegt.

11. Scheibenbremse nach wenigstens einem der Ansprüche 1 bis 10, **dadurch gekennzeichnet, dass** der Belagträger (1) aus einer Metallplatte gebildet ist.

12. Verfahren zum Aufbringen von Bolzen (4) auf Belagträger (1) für Scheibenbremsen, insbesondere Bremsklötze wobei der Bolzen (4) aus einem weichen Material und der Belagträger (1) aus einem härteren Material gebildet ist und der Bolzen (4) mit dem Belagträger (1) verbunden wird, **dadurch gekennzeichnet, dass** der Bolzen (4), gebildet aus einem Nichteisenmetall, auf den Belagträger (1) über Laserschweissverfarhen, Spitzenschweissverfahren oder Hubzündschweissverfahren mit dem Belagträger (1) verschweisst wird und sich der Bolzen (4) mit dem Reibbelag (3) beim Bremsen abschleift.

13. Verfahren nach Anspruch 12, **dadurch gekennzeichnet, dass** der Bolzen (4) automatisiert auf den Belagträger (1) aufgeschweisst wird.

14. Verfahren nach Anspruch 12 oder 13, **dadurch gekennzeichnet, dass** der Bolzen (4) als Spitzenzünder oder Hubzünder zum Aufschweissen auf den Belagträger (1) ausgebildet ist.

15. Verfahren nach wenigstens einem der Ansprüche 12 bis 14, **dadurch gekennzeichnet, dass** der Bolzen (4) ein Spitzenschweissverfahren oder im Hubzündschweissverfahren, mit oder ohne Schutzgas mit dem Belagträger (1) fest verschweisst wird.

16. Verfahren nach wenigstens einem der Ansprüche 12 bis 15, **dadurch gekennzeichnet, dass** eine Länge (L₁) des Bolzens (4) gewählt wird, die zumindest eine Hälfte der Dicke (D_{R}) des Reibbelages (3) bis hin zur vollständigen Dicke (D_{R}) des Reibbelages (3) entspricht.

17. Verfahren nach wenigstens einem der Ansprüche 12 bis 16, **dadurch gekennzeichnet, dass** als Bolzen (4) weiches Messing, insbesondere MS 60 verwendet wird, welches weicher ist als die Materialien des Reibbelages (1) und/oder einer Bremsscheibe.

18. Verfahren nach wenigstens einem der Ansprüche 12 bis 17, **dadurch gekennzeichnet, dass** durch die Wahl der Länge und/oder des Durchmessers (M) des Bolzens (4) Einfluss auf die Belagoberflächenspannung und/oder auf die Reibbelagkompressibilität genommen wird.

19. Verfahren nach wenigstens einem der Ansprüche 12 bis 18, **dadurch gekennzeichnet, dass** der Bolzen (4) auf den Belagträger (1) aufgeschweisst wird und den Underlayer (2) vollständig durchgreift und mindestens von einer Bremslänge (L₁ bis L₂) ist, die im Bereich der Hälfte der Dicke (D_{R}) bis zur vollständigen Dicke (D_{R}) des Reibbelages (3) liegt.

20. Verwendung eines Bolzens (4) für Belagträger (1) für Scheibenbremsen, wobei als Material für den Bolzen (4) Nichteisenmetall verwendet wird und sich der Bolzen (4) mit dem Reibbelag (3) beim Bremsen abschleift.

## Claims

1. Disc brake, in particular a brake pad comprising a lining carrier (1) and a friction lining (3), wherein for incorporating the friction lining (3) a pin (4) is seated on the lining carrier (1),
**characterized in**
**that** the pin (4) engages from the lining carrier (1) through the friction lining (3) from approximately the middle to approximately the lining surface (5), wherein the pin (4) is formed from a non-ferrous metal and during operation the pin (4) abrades with the friction lining (3) during braking.

2. Disc brake according to claim 1, **characterized in that** the pin (4) engages completely through the friction lining (3).

3. Disc brake according to claim 1 or 2, **characterized in that** the pin (4) is welded onto the lining carrier (1).

4. Disc brake according to at least one of claims 1 to 3, **characterized in that** the pin (4) is manufactured from brass.

5. Disc brake according to at least one of claims 1 to 4, **characterized in that** the pin (4) is manufactured from brass, MS 60.

6. Disc brake according to at least one of claims 4 or 5, **characterized in that** the pin (4) formed from brass is firmly welded, in particular laser-welded to the lining carrier (1).

7. Disc brake according to at least one of claims 4 to 6, **characterized in that** the pin (4) manufactured from brass is weldable onto the lining carrier (1) by means of laser welding, tip ignition welding or lift-and-strike welding techniques.

8. Disc brake according to claim 7, **characterized in that** the pin (4) is welded onto the lining carrier (1) in an automated manner by means of laser welding, tip ignition welding or lift-and-strike welding techniques, and the pin (4) takes the form of a tip igniter or lift igniter.

9. Disc brake according to at least one of claims 1 to 8, **characterized in that** an underlayer (2) is provided between lining carrier (1) and friction lining (3).

10. Disc brake according to at least one of claims 1 to 9, **characterized in that**, for influencing the lining surface tension and/or the friction lining compressibility of the friction lining (3), the pin (4) is designed with a pin length (L₁ to L₄) in the range of ½ the thickness D_{R} of the friction lining 3 to the full thickness D_{R} of the friction lining.

11. Disc brake according to at least one of claims 1 to 10, **characterized in that** the lining carrier (1) is formed from a metal plate.

12. Method of attaching pins (4) onto lining carriers (1) for disc brakes, in particular brake pads, wherein the pin (4) is formed from a soft material and the lining carrier (1) is formed from a harder material and the pin (4) is connected to the lining carrier (1), **characterized in that** the pin (4), formed from a non-ferrous metal, is welded onto the lining carrier (1) by laser welding, tip ignition welding or lift-and-strike welding techniques and the pin (4) abrades with the friction lining (3) during braking.

13. Method according to claim 12, **characterized in that** the pin (4) is welded in an automated manner onto the lining carrier (1).

14. Method according to claim 12 or 13, **characterized in that** the pin (4) takes the form of a tip igniter or lift igniter for welding onto the lining carrier (1).

15. Method according to at least one of claims 12 to 14, **characterized in that** the pin (4) is firmly welded to the lining carrier (1) by tip ignition welding or lift-and-strike welding, with or without shielding gas.

16. Method according to at least one of claims 12 to 15, **characterized in that** a length (L₁) of the pin (4) that corresponds to at least half the thickness (D_{R}) of the friction lining (3) up to the full thickness (D_{R}) of the friction lining (3) is selected.

17. Method according to at least one of claims 12 to 16, **characterized in that** as pin (4) soft brass, in particular MS 60 is used, which is softer than the materials of the friction lining (1) and/or a brake disc.

18. Method according to at least one of claims 12 to 17, **characterized in that** by selection of the length and/or the diameter (M) of the pin (4) influence is brought to bear upon the lining surface tension and/or upon the friction lining compressibility.

19. Method according to at least one of claims 12 to 18, **characterized in that** the pin (4) is welded onto the lining carrier (1) and engages right through the underlayer (2) and is at least of a braking length (L₁ to L₂) that lies in the region of half the thickness (DR) to the full thickness (DR) of the friction lining (3).

20. Use of a pin (4) for lining carriers (1) for disc brakes, wherein as a material for the pin (4) non-ferrous metal is used and the pin (4) abrades with the friction lining (3) during braking.

## Revendications

1. Frein à disque, en particulier sabot de frein, avec un porte-garniture (1) et une garniture de friction (3), sur le porte-garniture (1) se trouvant, pour ligaturer la garniture de friction (3), au moins un boulon (4),
**caractérisé par le fait**
**que** le boulon (4) traverse, partant du porte-garniture (1), la garniture de friction (3) environ du centre jusqu'à la surface de la garniture (5), le boulon (4) étant formé en un métal non-ferreux et que, en fonctionnement, le boulon (4) s'érode avec la garniture de friction (3) lors du freinage.

2. Frein à disque selon la revendication 1, **caractérisé par le fait que** le boulon (4) traverse complètement la garniture de friction (3).

3. Frein à disque selon la revendication 1 ou 2, **caractérisé par le fait que** le boulon (4) est soudé sur le porte-garniture (1).

4. Frein à disque selon au moins l'une des revendications 1 à 3, **caractérisé par le fait que** le boulon (4) est réalisé en laiton.

5. Frein à disque selon au moins l'une des revendications 1 à 4, **caractérisé par le fait que** le boulon (4) est réalisé en laiton MS 60.

6. Frein à disque selon au moins l'une des revendications 4 ou 5, **caractérisé par le fait que** le boulon (4) réalisé en laiton est assemblé par soudure, en particulier par soudure au laser, avec le porte-garniture (1).

7. Frein à disque selon au moins l'une des revendications 4 à 6, **caractérisé par le fait que** le boulon (4) réalisé en laiton peut être soudé sur le porte-garniture (1) au moyen de procédés de soudure au laser, de procédés de soudure à allumage de pointe ou de procédés de soudure à allumage de course.

8. Frein à disque selon la revendication 7, **caractérisé par le fait que** le boulon (4) est soudé de manière automatisée, au moyen de procédés de soudure au laser, de procédés de soudure à allumage de pointe ou de procédés de soudure à allumage de course, au porte-garniture (1), et que le boulon (4) est réalisé sous forme d'allumeur de pointe ou d'allumeur de course.

9. Frein à disque selon au moins l'une des revendications 1 à 8, **caractérisé par le fait qu'**entre le porte-garniture (1) et la garniture de friction (3) est prévue une couche inférieure (2).

10. Frein à disque selon au moins l'une des revendications 1 à 9, **caractérisé par le fait que**, pour exercer une influence sur la tension superficielle de la garniture et/ou la compressibilité de la garniture de friction (3), le boulon (4) est réalisé à une longueur de boulon (L₁ à L₄) qui est de l'ordre de 1/2 de l'épaisseur D_{R} de la garniture de friction 3 jusqu'à toute l'épaisseur D_{R} de la garniture de friction.

11. Frein à disque selon au moins l'une des revendications 1 à 9, **caractérisé par le fait que** le porte-garniture (1) est formé à partir d'une plaque de métal.

12. Procédé pour placer des boulons (4) sur des porte-garniture (1) pour freins à disque, en particulier sabots de frein, le boulon (4) étant réalisé en un matériau doux et le porte-garniture (1) en un matériau plus dur et le boulon (4) étant assemblé avec le porte-garniture (1), **caractérisé par le fait que** le boulon (4), réalisé en un métal non-ferreux, est soudé sur le porte-garniture (1) au moyen de procédés de soudure au laser, de procédés de soudure à allumage de pointe ou de procédés de soudure à allumage de course et que le boulon (4) s'érode avec la garniture de friction (3) lors du freinage.

13. Procédé selon la revendication 12, **caractérisé par le fait que** le boulon (4) est soudé de manière automatisée au porte-garniture (1).

14. Procédé selon la revendication 12 ou 13, **caractérisé par le fait que** le boulon (4) est réalisé sous forme d'allumeur de pointe ou d'allumeur de course en vue du soudage sur le porte-garniture (1).

15. Procédé selon au moins l'une des revendications 12 à 14, **caractérisé par le fait que** le boulon (4) est assemblé par soudure avec le porte-garniture (1) par un procédé de soudure à allumage de pointe ou un procédé de soudure à allumage de course, avec ou sans gaz de protection.

16. Procédé selon au moins l'une des revendications 12 à 15, **caractérisé par le fait qu'**il est choisi une longueur (L₁) du boulon (4) qui correspond au moins à la moitié de l'épaisseur (D_{R}) de la garniture de friction (3) jusqu'à toute l'épaisseur {D_{R}) de la garniture de friction (3).

17. Procédé selon au moins l'une des revendications 12 à 16, **caractérisé par le fait qu'**il est utilisé comme boulon (4) du laiton doux, en particulier MS 60, qui est plus doux que les matériaux de la garniture de friction (1) et/ou d'un disque de frein.

18. Procédé selon au moins l'une des revendications 12 à 17, **caractérisé par le fait que** par le choix de la longueur et/ou du diamètre (M) du boulon (4) est exercée une influence sur la tension superficielle de la garniture et/ou sur la compressibilité de la garniture de friction.

19. Procédé selon au moins l'une des revendications 12 à 18, **caractérisé par le fait que** le boulon (4) est soudé sur le porte-garniture (1) et traverse complètement la couche inférieure (2) et est d'au moins une longueur de freinage (L₁ à L₂) qui est de l'ordre de la moitié de l'épaisseur (D_{R}) à tout l'épaisseur (D_{R}) de la garniture de friction (3).

20. Utilisation d'un boulon (4) de porte-garniture (1) pour freins à disque, comme matériau pour le boulon (4) étant utilisé un métal non-ferreux et le boulon (4) s'érodant avec la garniture de friction (3) lors du freinage.
